(19) Europäisches Patentamt
European Patent Office
Office européen des brevets

(11) Veröffentlichungsnummer : **0 346 604 B1**

(12) # EUROPÄISCHE PATENTSCHRIFT

(45) Veröffentlichungstag der Patentschrift : **19.02.92 Patentblatt 92/08**

(51) Int. Cl.$^5$ : **B01J 20/18,** C08G 18/08

(21) Anmeldenummer : **89107980.8**

(22) Anmeldetag : **03.05.89**

(54) **Kaliumzeolith 3A.**

(30) Priorität : **11.06.88 DE 3819908**
**07.04.89 DE 3911284**

(43) Veröffentlichungstag der Anmeldung : **20.12.89 Patentblatt 89/51**

(45) Bekanntmachung des Hinweises auf die Patenterteilung :
**19.02.92 Patentblatt 92/08**

(84) Benannte Vertragsstaaten :
**AT BE CH DE FR GB IT LI NL SE**

(56) Entgegenhaltungen :
**EP-A- 0 239 706**
**DE-A- 1 669 164**
**DE-A- 1 928 129**
**DE-A- 3 617 840**
**US-A- 3 982 912**

(73) Patentinhaber : **Degussa Aktiengesellschaft**
**Weissfrauenstrasse 9**
**W-6000 Frankfurt am Main 1 (DE)**

(72) Erfinder : **Dörr, Jürgen, Dr.**
**Buchenweg 11**
**W-5040 Brühl (DE)**

EP 0 346 604 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen Kaliumzeolithen 3A, seine Herstellung sowie seine Verwendung als Trockenmittel in Polyurethanformulierungen.

Polyurethane sind Makromoleküle, in denen die Urethangruppierung ein wichtiges Bindeglied ist. Polyurethan wird durch Addition von Di- oder Polyhydroxyverbindungen an Di- oder Polyisocyanate hergestellt. Die Umsetzung verläuft nach folgemdem Schema:

$$R-N=C=O \quad + \; HO-R' \longrightarrow R-\overset{H}{N}-\overset{O}{\overset{\|}{C}}-OR' \qquad (1)$$

$$\text{Isocyanat} \quad + \; \text{Alkohol} \longrightarrow \text{Urethan}$$

Isocyanat reagiert ebenfalls mit Wasser, wobei gleichzeitig Kohlendioxid entweicht:

$$R-N=C=O \; + \; H-O-H \longrightarrow R-\overset{H}{N}-\overset{O}{\overset{\|}{C}}-OH \longrightarrow$$

$$CO_2 \quad + \; RNH_2 \qquad (2)$$

Diese hydrolysierten Isocyanatgruppen stehen für die Polymerisation nicht mehr zur Verfügung.

Die Polyhydroxyverbindungen enthalten je nach Herkunft und Qualität bis zu 5 Gew.-% Wasser. Um die Nebenreaktion (2) zu unterdrücken, muß das Wasser mit einem geeigneten Trockenmittel adsorbiert werden. Als Trockenmittel finden aktivierte Zeolithpulver vom Typ 3A und 4A Verwendung.

Aktivierte Zeolithpulver vom Typ 4A (Na-Form, Porenweite 4 Å) haben den Nachteil, daß während der $H_2O$-Adsorption Luft (d. h., hauptsächlich Stickstoff) aus dem Porensystem des Zeolithen entweicht. Dies kann zu unerwünschten Blasenbildungen in der Polyurethan-Masse führen.

Die Blasenbildung kann vermieden werden, indem man aktivierte Zeolithpulver vom Typ 3A ($K^+$-ausgetauschte Form, Porenweite 3 Å) verwendet. Adsorption und Desorption von Luft an Zeolithpulvern Typ 3A findet nicht statt (vgl. DE-A- 19 28 129).

Diese bekannte Verwendung von Zeolith 3A weist jedoch Nachteile auf, die sich auf die Polyurethanbildung negativ auswirken.

Die Polyurethan-Bildung kann sowohl sauer als auch alkalisch katalysiert werden. Die alkalisch reagierenden Zeolithe Typ A (pH-Wert = 11,0) beschleunigen die Polymerisation. Die Verarbeitungs- oder Topfzeit nimmt ab. Als Topfzeit ist die Zeit anzusehen, in der die Viskosität einer frisch angesetzten PU-Formulierung auf 15000 mPas ansteigt.

Gute Topfzeiten liegen über 40 min. Kleine Topfzeiten erfordern eine rasche Verarbeitung.

Die Alkalität der Zeolithe macht sich besonders negativ bemerkbar, wenn die Mischung Polyhydroxykomponente/Zeolithe länger gelagert wird. Der Zeolith gibt freies Alkali an die organische Polyhydroxykomponente ab, die Polymerisation wird beschleunigt. Die Topfzeit nimmt mit zunehmender Lagerzeit der Mischung Polyhydroxykomponente/Zeolith ab.

Gegenstand der Erfindung ist ein Kaliumzeolith 3A, welcher dadurch gekennzeichnet ist, daß er einen pH-Wert von 7,5 bis 8,5, vorzugsweise von 7,5 bis 8,0 ermittelt in wässriger Suspension gemäß DIN ISO 787/IX aufweist.

Der pH-Wert wird in wäßriger Suspension gemäß DIN ISO 787/IX ermittelt.

Der erfindungsgemäße Kaliumzeolith 3A mit einem pH-Wert $\leqq$ 9,5 kann hergestellt werden, indem man einen Natriumzeolithen des Typs NaA auf bekannten Wege mit einer Kaliumsalzlösung austauscht und den ausgetauschten Kaliumzeolithen mit einer Säure behandelt. Die Behandlung mit Schwefelsäure kann während des Ionenaustausches als auch nach dem Ionenaustausch erfolgen.

In einer bevorzugten Ausführungsform der Erfindung wird der ausgetauschte Kaliumzeolith 3A von der Reaktionslösung abfiltriert, der Filterkuchen mit Wasser redispergiert und die so erhaltene Suspension mit verdünnter Schwefelsäure auf einen pH-Wert $\leqq$ 9,5, vorzugsweise $\leqq$ 8,5 insbesondere 7,5 bis 8,0 eingestellt.

Bei dieser Maßnahme ist zu beachten, daß der pH-Wert nicht unter 7,5 eingestellt wird, weil der Kaliumzeolith 3A nicht säurestabil ist und bei einem pH-Wert von 7 deutlich an Kristallinität verliert.

Der mit Säure behandelte Kaliumzeolith 3A wird auf bekanntem Wege, vorzugsweise mittels Sprühtrocknung, getrocknet und anschließend auf bekanntem Wege aktiviert.

Der erfindungsgemäße Kaliumzeolith 3A verändert die Polymerisationsgeschwindigkeit der Mischung Polyhydroxykomponente/Zeolith nicht. Die Topfzeit bleibt konstant.

Erfindungsgemäß kann der Kaliumzeolith 3A bei dem Einsatz als Trockenmittel in Polyurethanmischungen einen pH-Wert von 7,5 bis 9,5 aufweisen und nach dem Verfahren gemäß Ansprüche 2 begestellt sind.

Beispiele

Eine wichtige Prüfmethode ist die Bestimmung der Topfzeit. Die Rezeptur einer Standard-Polyurethan-Formulierung, die zur Topfzeit-Messunkg verwendet wird, wird unten beschrieben. Die Lagerstabilität von Mischungen Polyhydroxykomponente/Zeolith wird ebenfalls untersucht. Dazu werden Mischungen aus Polyhydroxykomponente und Zeolithpulver künstlich gealtert (60 °C, 24 h).

A) Testrezeptur-Herstellung

Folgende Testrezeptur wird durch Mischen und Abreiben auf Einwalze hergestellt:

| Harzkomponente | Gew.-Tel. Gramm |
|---|---|
| 1. Rizinusöl, Qualität, z. B. Typ DRO Fa. Bayer | 162 |
| 2. Desmophen R 550 U (Fa. Bayer) | 9 |
| 3. Tripropylenglykol | 48 |
| 4. Molekularsiebpulver | 18 |
| 5. Titandioxid, z. B. RKB2, Fa. Bayer | 3 |
| 6. Eisenoxidgelb 930 (Fa. Bayer) | 6 |
| 7. Aerosil RR 972 (Fa. Degussa) | 0,6 |
| 8. Blanc fixe RN (Fa. Sachtleben) | 353,4 |
| | 600,0 |

Diese Harzrezeptur ist mit Härter Desmodur RVL (Fa. Bayer) im Verhältnis Harz : Härter = 4.1 nach Gewichtsteilen vernetzt.

Unmittelbar nach dem Mischen unter dem Dissolver findet die erste Topfzeitmessung, nach Lagerung der beiden Komponenten in verschlossenen Glasflaschen bei 60 °C (Laborofen) nach 24 Stunden die zweite Topfzeitbestimmung statt.

B) Messung der Topfzeit und Beurteilung

Harz und Härter werden auf 20 °C temperiert. Anschließend werden 240 g Harz mit 60 g Härter manuell in einem 500 1 Becher 1 Minute lang vermischt und anschließend in einen 200 ml Becher (∅ ca. 6 cm) gegeben.

Der Viskositätsanstieg wird dann mit einem Roationsviskometer (Brookfield, Typ RVF, Spindel 5, Geschwindigkeit 20 Upm) aufgezeichnet. Als Topfzeit ist die Zeit definiert, in der die Viskosität auf 15000 mPas ansteigt. Die Topfzeit darf am Anfang und nach Lagerung 35 Minuten nicht unterschreiten.

Beispiel 1

600 kg handelsüblicher Zeolith A (z. B. Wessalith PR) werden in einer Lösung von 112 kg $K_2SO_4$ in 1150 kg $H_2O$ angemischt. Unter Rühren gibt man zu dieser Suspension 30,5 kg 20 %ige $H_2SO_4$ zu, um einen pH-Wert von 8,5 einzustellen. Die Mischung wird 1 h homogenisiert und danach abfiltriert. Der Filterkuchen wird redispergiert, mit 23 kg 20 %iger $H_2SO_4$ auf pH 8,0 eingestellt, sprühgetrocknet und aktiviert.

Beispiel 2

Entsprechend Beispiel 1 mit dem Unterschied, daß die gesamte $H_2SO_4$-Menge (53,5 kg) in die Suspension eingerührt wird.

Beispiel 3

Entsprechend Beispiel 1 mit dem Unterschied, daß statt

600 kg 100 kg Zeolith A
112 kg 20 kg $K_2SO_4$
1150 kg 250 kg $H_2O$

eingesetzt werden.

Die Suspension wird mit 50 kg 15 %iger $H_2SO_4$ auf pH = 8,0 eingestellt, homogenisiert und filtriert. Der redispergierte Filterkuchen wird mit 15 kg 15 %iger $H_2SO_4$ auf pH = 7,5 eingestellt und, wie in Beispiel 1, weiterverarbeitet.

Beispiel 4

50 kg Zeolith A werden in einer Lösung von 11 kg $K_2SO_4$ in 300 kg $H_2O$ suspendiert. Die Suspension wird in 5 gleich große Ansätze geteilt. Durch Zugabe von 20 %iger $H_2SO_4$ werden pH-Werte von 7,5 - 9,5 eingestellt. Die Weiterverarbeitung erfolgt wie in Beispiel 1.

| pH | Topfzeit nach 0 h | Topfzeit nach 24 h bei 60 °C |
|---|---|---|
| 7,5 | 60 min | 55 min |
| 8,0 | 60 min | 55 min |
| 8,5 | 50 min | 45 min |
| 9,0 | 35 min | 20 min |
| 9,5 | 25 min | 15 min |

## Patentansprüche

1. Kaliumzeolith 3A, dadurch gekennzeichnet, daß er einen pH-Wert von 7,5 bis 8,5 ermittelt in wässriger Suspension gemäß DIN ISO 787/IX aufweist.

2. Verfahren zur Herstellung des Kaliumzeolithen 3A mit einem pH-Wert ≤ 9,5, dadurch gekennzeichnet, daß man einen Natriumzeolithen des Typs NaA auf bekanntem Wege mit einer Kaliumsalzlösung austauscht und den ausgetauschten Kaliumzeolithen mit einer Säure behandelt.

3. Verwendung des Kaliumzeolithen 3A gemäß Anspruch 1 als Trockenmittel in Polyurethan-Formulierungen.

4. Verwendung von Kaliumzeolith 3A mit einem pH-Wert von 7,5 bis 9,5 hergestellt nach dem Verfahren gemäß Anspruch 2 als Trockenmittel in Polyurethan-Formulierungen.

## Claims

1. Potassium zeolite 3A, characterised in that it has a pH of from 7.5 to 8.5, determined in an aqueous suspension according to DIN ISO 787/IX.

2. A process for the preparation of potassium zeolite 3A having a pH of ≤ 9.5, characterised in that a sodium zeolite of type NaA is exchanged with a potassium salt solution in known manner and the exchanged potassium zeolite is treated with an acid.

3. Use of potassium zeolite 3A according to Claim 1 as dehydrating agent in polyurethane formulations.

4. Use of potassium zeolite 3A having a pH of from 7.5 to 9.5 prepared by the process according to Claim 2 as dehydrating agent in polyurethane formulations.

## Revendications

1. Zéolite potassique 3A, caractérisée en ce qu'elle présente un pH de 7,5 à 8,5, déterminé en suspension aqueuse selon DIN ISO 787/IX.

2. Procédé pour la préparation de la zéolite potassique 3A ayant un pH ≦ 9,5, caractérisé en ce que l'on soumet à un échange ionique une zéolite sodique du type NaA, de façon connue, à l'aide d'une solution de sel de potassium et qu'on traite par un acide la zéolite potassique échangée.

3. Utilisation de la zéolite potassique 3A selon la revendication 1, en tant que desséchant dans des formulations de polyuréthanne.

4. Utilisation de la zéolite potassique 3A ayant un pH de 7,5 à 9,5, préparée par le procédé selon la revendication 2, en tant que desséchant dans des formulations de polyuréthanne.